# FASCICULE DE BREVET EUROPEEN

(11) **EP 2 779 372 B1**
(45) Date de publication et mention de la délivrance du brevet: **12.08.2015**
(21) Numéro de dépôt: 14156302.3
(22) Date de dépôt: 24.02.2014
(51) Int. Cl.: H02K 7/06, H02K 7/116, H02K 11/00, B64C 25/44

(54) **Actionneur électromécanique pour frein**
Elektromechanisches Stellglied für Bremse
Electromechanical actuator for brake

(30) Priorité: 12.03.2013 FR 1352209
(43) Date de publication de la demande: 17.09.2014
(73) Titulaire: Messier-Bugatti-Dowty, 78140 Vélizy-Villacoublay (FR)
(72) Inventeur: Richard, Nathanaël, 78140 VELIZY-VILLACOUBLAY (FR); Evenor, Eric, 78140 VELIZY-VILLACOUBLAY (FR); Selles, Franck, 78140 VELIZY-VILLACOUBLAY (FR)
(74) Mandataire: Parzy, Benjamin Alain

(56) Documents cités:
- EP-A2- 0 936 373
- WO-A2-2005/001303
- DE-A1-102007 037 447
- US-A1- 2005 251 306
- US-A1- 2009 320 614

## Description

L'invention concerne un actionneur électromécanique pour frein de véhicule comportant deux parties séparables.

### ARRIERE PLAN DE L'INVENTION

Dans un système de freinage électrique d'aéronef, chaque roue freinée est munie d'un frein comportant des organes de friction, généralement une pile de disques de carbone empilés autour d'un tube de torsion, et des actionneurs électromécaniques portés par un porte-actionneurs et commandés pour appliquer un effort de freinage sur les organes de friction en vue d'exercer sur la roue un couple de freinage tendant à ralentir l'aéronef.

Chaque actionneur électromécanique est alimenté électriquement et commandé par des moyens de commande externes. Un actionneur comporte généralement un poussoir, un moteur électrique adapté à déplacer le poussoir en regard des organes de friction, un organe de blocage pour bloquer en position le poussoir, ainsi que des capteurs associés au moteur (capteur de position, etc.) ou au poussoir (capteur d'effort, thermocouple, etc.). Pour commander le moteur électrique, actionner l'organe de blocage et acquérir les mesures réalisées par les capteurs, les moyens de commande sont connectés aux actionneurs via un harnais de connexion. Chaque actionneur est équipé d'un connecteur pour recevoir ce harnais.

Les concepteurs de systèmes de freinage ou d'actionneurs ont souhaité réaliser des actionneurs formés de deux parties séparables : une première partie comprenant le moteur, l'organe de blocage, et les capteurs associés au moteur, et une deuxième partie comprenant le poussoir et les capteurs associés au poussoir. En cas de panne de l'une des deux parties, on démonte uniquement la partie en panne, et on conserve sur le frein la partie fonctionnelle. Cette configuration présente un intérêt économique certain lorsque l'une des deux parties a une fiabilité sensiblement inférieure à l'autre.

Cependant, comme chaque partie coopère électriquement avec les moyens de commande, il est nécessaire de munir chaque partie d'un connecteur électrique. On ajoute donc un deuxième connecteur à l'actionneur, ce qui augmente son coût et complexifie la gestion des interfaces ainsi que le harnais de connexion.

Document EP0936373 décrit un actionneur électromécanique pour frein d'avion.

### OBJET DE L'INVENTION

L'invention a pour objet un actionneur formé de deux parties séparables, ne présentant pas les inconvénients évoqués plus tôt.

### RESUME DE L'INVENTION

En vue de la réalisation de ce but, on propose un actionneur électromécanique pour frein de véhicule comportant une première partie et une deuxième partie séparables, la première partie comprenant un moteur électrique et des moyens de connexion pour la connexion de l'actionneur à des moyens de commande externes, et la deuxième partie comprenant un poussoir monté pour coulisser en saillant de la deuxième partie à travers une ouverture pratiquée dans celle-ci, la première partie et la deuxième partie étant accouplées de sorte que le moteur coopère avec le poussoir pour provoquer un déplacement du poussoir en réponse à une action du moteur, la deuxième partie comprenant en outre des moyens de mesure. Selon l'invention, la première partie comporte une première antenne reliée aux moyens de connexion et la deuxième partie comporte une deuxième antenne reliée aux moyens de mesure, les deux antennes étant disposées pour être couplées électromagnétiquement l'une à l'autre lorsque la première partie et la deuxième partie sont accouplées, de manière à permettre des transferts de signaux électriques entre les moyens de mesure et les moyens de connexion. La première et la deuxième antenne permettent, lorsque la première partie et la deuxième partie de l'actionneur sont accouplées, de relier électriquement ces parties. Ainsi, des signaux électriques peuvent être transférés entre les moyens de mesure de la deuxième partie et les moyens de commande externes, via les moyens de connexion, sans liaison filaire entre la première et la deuxième partie. Les deux parties sont donc séparables sans qu'il soit nécessaire d'équiper la deuxième partie de moyens de connexion aux moyens de commande externes, ce qui simplifie l'actionneur, le harnais de connexion reliant l'actionneur aux moyens de commande externe, et la gestion des interfaces.

### BREVE DESCRIPTION DES DESSINS

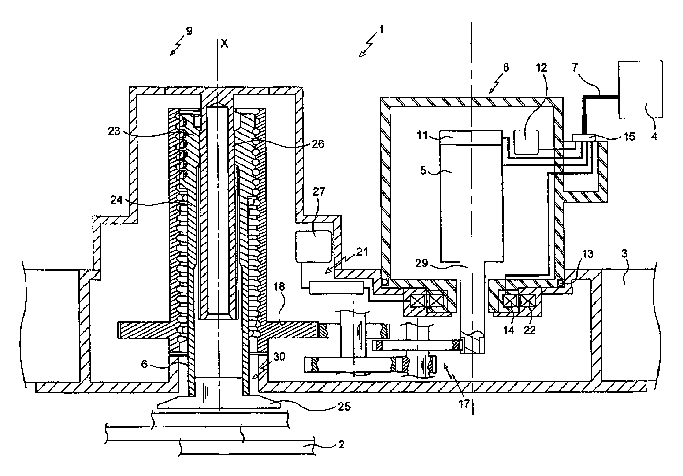

L'invention sera mieux comprise à la lumière de la description qui suit en référence à la figure du dessin annexé, qui représente schématiquement un actionneur électromécanique de l'invention.

### DESCRIPTION DETAILLEE DE L'INVENTION

Un actionneur électromécanique 1 de l'invention est destiné à appliquer sélectivement un effort de freinage sur des organes de friction 2 d'un frein d'une roue d'aéronef, ici une pile de disques en carbone. Cet actionneur 1 est monté sur un porte-actionneurs 3 du frein et fixé au porte-actionneurs grâce à des moyens de fixation non représentés sur la figure.

L'actionneur 1 est commandé par des moyens de commande externes 4 qui reçoivent une consigne de freinage, déterminent l'effort de freinage à appliquer, et génèrent une puissance électrique de commande pour commander un moteur électrique 5 de l'actionneur 1 en fonction de cet effort de freinage. Le moteur électrique 5 déplace alors un poussoir 6 en regard de la pile de disques 2 pour appliquer l'effort de freinage sur la pile de disques 2.

Pour transmettre cette puissance électrique de commande, l'actionneur 1 est relié aux moyens de commande 4 par un harnais de connexion 7. Le porte-actionneurs 3 comporte éventuellement un boîtier de connexion connecté à tous les actionneurs du frein et relié par un câble unique aux moyens de commande 4.

L'actionneur est formé d'une première partie 8 et d'une deuxième partie 9 séparables.

La première partie 8 de l'actionneur 1 comporte des moyens de connexion de l'actionneur 1 aux moyens de commande 4, le moteur électrique 5, un organe de blocage 11, un capteur de position angulaire 12 d'un rotor du moteur, un joint d'étanchéité 13, ainsi qu'une première antenne 14.

Les moyens de connexion comprennent un connecteur électrique 15 auquel est connecté le harnais de connexion 7. Le moteur électrique 5 est relié au connecteur électrique 15 pour recevoir la puissance électrique de commande et être commandé par les moyens de commande 4.

L'organe de blocage 11 et le capteur de position 12 sont eux aussi reliés au connecteur électrique 15 et connectés aux moyens de commande 4.

L'organe de blocage 11 est un dispositif électromagnétique permettant de bloquer le moteur en rotation.

Le capteur de position angulaire 12 fournit une position angulaire précise du rotor aux moyens de commande 4 pour que la puissance électrique de commande transmise au moteur électrique 5 optimise le couple fourni par le moteur 5.

Le connecteur électrique 15 et le harnais de connexion 7 sont aussi utilisés pour alimenter l'organe de blocage 11 et transmettre les mesures de position angulaire du rotor aux moyens de commande 4.

La deuxième partie 9 de l'actionneur 1 comporte un réducteur 17, un écrou 18, le poussoir 6, un dispositif d'anti-rotation, des moyens de mesure 21, ainsi qu'une deuxième antenne 22.

Le poussoir 6 est fileté sur une certaine longueur 23 pour coopérer par l'intermédiaire d'une liaison vis/écrou avec l'écrou 18. Le poussoir 6 comporte par ailleurs une partie courante cylindrique 24 d'axe X portant à son extrémité un patin 25. Le dispositif d'anti-rotation comprend ici un doigt central cannelé 26 coopérant avec des cannelures internes du poussoir 6 empêchant toute rotation du poussoir 6 autour de l'axe X.

Les moyens de mesure 21 comportent ici un capteur d'effort 27 réalisant au niveau de la liaison vis/écrou des mesures d'effort représentatives de l'effort de freinage appliqué par l'actionneur 1. Les moyens de mesure 21 comportent en outre une unité électrique 28 reliée au capteur d'effort 27 et à la deuxième antenne 22.

Lorsqu'elles sont accouplées pour former l'actionneur 1 de l'invention, la première partie 8 et la deuxième partie 9 coopèrent tout d'abord mécaniquement. Le réducteur 17 transmet le mouvement de rotation d'un arbre 29 du moteur 5 à l'écrou 18, monté tournant dans la deuxième partie, qui coopère avec la longueur filetée 23 du poussoir 6. Le poussoir 6 coulisse alors longitudinalement sous l'action du moteur électrique 5 en saillant de la deuxième partie 9 à travers une ouverture 30 pratiquée dans celle-ci. La première partie 8 et la deuxième partie 9 sont solidarisées mécaniquement par des moyens non représentés sur la figure. Leur interface est rendue étanche grâce au joint d'étanchéité 13 de la première partie.

Lorsqu'elles sont accouplées, la première partie 8 et la deuxième partie 9 de l'actionneur 1 coopèrent aussi électriquement : les antennes 14, 22 sont couplées électromagnétiquement de manière à permettre des transferts de signaux électriques entre les moyens de mesure 21 et le connecteur électrique 15. Chacune des antennes 14, 22 comporte ici un élément inductif, en l'occurrence une bobine circulaire de fil conducteur. Les deux antennes sont disposées sensiblement concentriquement l'une par rapport à l'autre lorsque la première partie 8 et la deuxième partie 9 de l'actionneur 1 sont accouplées.

La première antenne 14 est connectée via le connecteur électrique 15 et le harnais de connexion 7 aux moyens de commande 4. Les moyens de commande 4 sont adaptés à générer un courant alternatif qui, en circulant dans la bobine de la première antenne, émet une onde électromagnétique captée par la bobine de la deuxième antenne 22. De l'énergie électrique est ainsi transférée par voie hertzienne aux moyens de mesure 21 de la deuxième partie 9, qui sont alimentés par cette énergie électrique : les moyens de mesure 21 ne nécessitent donc aucune source d'énergie propre.

L'unité électrique 28 des moyens de mesure 21 est, quant à elle, adaptée à acquérir les mesure d'effort réalisées par le capteur d'effort 27 lorsque celui-ci est alimenté, à numériser ces mesures d'effort, et à moduler une tension aux bornes de la bobine de la deuxième antenne 22. Cette modulation de tension a pour effet de moduler le courant circulant dans la bobine de la première antenne 14. Les moyens de commande 4 sont adaptés à interpréter cette modulation et à acquérir à leur tour les mesures d'effort réalisées par le capteur d'effort 27.

Grâce au couplage électromagnétique entre les deux antennes 14, 22, on peut donc alimenter les moyens de mesure 21 situés dans la deuxième partie 9 de l'actionneur 1 depuis les moyens de commande 4 reliés à la première partie 8 via le harnais 7 et le connecteur électrique 15, et transmettre aux moyens de commande 4 les mesures réalisées par le capteur d'effort, sans qu'il soit nécessaire d'ajouter des moyens de connexion à la deuxième partie. Ce couplage électromagnétique étant un couplage sans contact ne nécessitant pas de liaison filaire, les deux parties sont séparables sans qu'il soit nécessaire de déconnecter des fils. On pourra donc séparer les deux parties facilement en cas de panne de l'une des deux parties pour échanger la partie défectueuse.

L'invention n'est pas limitée à ce qui vient d'être décrit, mais bien au contraire englobe toute variante entrant dans le cadre défini par les revendications.

Bien que l'on ait défini des antennes comportant une bobine circulaire, il est bien sûr possible d'utiliser des antennes de géométrie ou de technologie différente (antenne patch, spirales de bobines gravées sur circuit imprimé, etc.).

Bien que l'on ait équipé la deuxième partie de l'actionneur d'un capteur d'effort, on pourrait aussi y installer un capteur de température mesurant par exemple la température à proximité de la surface de contact entre le patin et la pile de disques de carbone. Dans ce cas, ce capteur serait lui aussi connecté à l'unité électrique pour recevoir son alimentation électrique des moyens de commande et émettre les mesures vers la première partie.

Même si on a distingué, dans les moyens de mesure, le capteur de l'unité électrique, ceux-ci peuvent bien sûr être intégrés en un unique composant.

Bien que l'on ait considéré que les moyens de commande sont en charge de la commande du moteur de l'actionneur, de la commande de l'organe de blocage, de l'alimentation des moyens de mesure et de la récupération des données mesurées par les moyens de mesure, on pourrait bien sûr répartir certaines de ces tâches dans divers équipements connectés aux moyens de connexion de la première partie.

## Revendications

1. Actionneur électromécanique pour frein de véhicule comportant une première partie (8) et une deuxième partie (9) séparables, la première partie (8) comprenant un moteur électrique (5) et des moyens de connexion (15) pour la connexion de l'actionneur à des moyens de commande externes (4), et la deuxième partie (9) comprenant un poussoir (6) monté pour coulisser en saillant de la deuxième partie (9) à travers une ouverture (30) pratiquée dans celle-ci, la première partie (8) et la deuxième partie (9) étant accouplées de sorte que le moteur (5) coopère avec le poussoir (6) pour provoquer un déplacement du poussoir (6) en réponse à une action du moteur (5), la deuxième partie (9) comprenant en outre des moyens de mesure (21) pour mesurer une caractéristique de fonctionnement de l'actionneur,
**caractérisé en ce que** la première partie (8) comporte une première antenne (14) reliée aux moyens de connexion (15) et la deuxième partie (9) comporte une deuxième antenne (22) reliée aux moyens de mesure (21), les deux antennes (14, 22) étant disposées pour être couplées électromagnétiquement l'une à l'autre lorsque la première partie (8) et la deuxième partie (9) sont accouplées, de manière à permettre des transferts de signaux électriques entre les moyens de mesure (21) et les moyens de connexion (15).

2. Actionneur électromécanique selon la revendication 1, dans lequel les signaux électriques comprennent des mesures réalisées par les moyens de mesure (21) et transmis par les moyens de mesure (21).

3. Actionneur électromécanique selon la revendication 2, dans lequel les signaux électriques comprennent une alimentation des moyens de mesure (21).

4. Actionneur électromécanique selon l'une des revendications précédentes, dans lequel les antennes (14, 22) sont disposées sensiblement concentriquement l'une par rapport à l'autre lorsque les parties sont accouplées.

## Patentansprüche

1. Elektromechanischer Aktor für eine Fahrzeugbremse, umfassend einen ersten Teil (8) und einen zweiten Teil (9), die voneinander trennbar sind, wobei der erste Teil (8) einen Elektromotor (5) und Verbindungsmittel (15) für die Verbindung des Aktors mit externen Steuermitteln (4) umfasst, und wobei der zweite Teil (9) einen Stößel (6) umfasst, der verschiebbar gelagert ist, indem er aus dem zweiten Teil (9) durch eine in demselben ausgebildete Öffnung (30) heraustritt, wobei der erste Teil (8) und der zweite Teil (9) derart gekoppelt sind, dass der Motor (5) mit dem Stößel (6) zusammenwirkt, um eine Verschiebung des Stößels (6) in Antwort auf eine Aktion des Motors (5) hervorzurufen, wobei der zweite Teil (9) ferner Messmittel (21) zum Messen eines Betriebskennwertes des Aktors umfasst,
**dadurch gekennzeichnet, dass** der erste Teil (8) eine erste Antenne (14) umfasst, die mit den Verbindungsmitteln (15) verbunden ist, und der zweite Teil (9) eine zweite Antenne (22) umfasst, die mit den Messmittein (21) verbunden ist, wobei die beiden Antennen (14, 22) so angeordnet sind, dass sie elektromagnetisch miteinander gekoppelt sind, wenn der erste Teil (8) und der zweite Teil (9) gekoppelt sind, derart, dass sie Übertragungen von elektrischen Signalen zwischen den Messmitteln (21) und den Verbindungsmitteln (15) ermöglichen.

2. Elektromechanischer Aktor nach Anspruch 1, wobei die elektrischen Signale Messungen umfassen, die von den Messmitteln (21) durchgeführt und von den Messmitteln (21) übertragen werden.

3. Elektromechanischer Aktor nach Anspruch 2, wobei die elektrischen Signale eine Versorgung der Messmittel (21) umfassen.

4. Elektromechanischer Aktor nach einem der vorhergehenden Ansprüche, wobei die Antennen (14, 22) im Wesentlichen konzentrisch zueinander angeordnet sind, wenn die Teile gekoppelt sind.

## Claims

1. An electromechanical actuator for a vehicle brake, the actuator comprising a first portion (8) and a second portion (9) that are separable, the first portion (8) having an electric motor (5) and connection means (15) for connecting the actuator to external control means (4), and the second portion (9) including a pusher (6) mounted to slide so as to project from the second portion (9) through an opening (30) formed therein, the first portion (8) and the second portion (9) being coupled together so that the motor (5) co-operates with the pusher (6) to cause the pusher (6) to move in response to drive from the motor (5), the second portion (9) further including measurement means (21) for measuring an operating characteristic of the actuator; the actuator being **characterized in that** the first portion (8) includes a first antenna (14) connected to the connection means (15), and the second portion (9) includes a second antenna (22) connected to the measurement means (21), the two antennas (14, 22) being arranged so as to be electromagnetically coupled together when the first portion (8) and the second portion (9) are coupled together, so as to enable electrical signals to be transferred between the measurement means (21) and the connection means (15).

2. An electromechanical actuator according to claim 1, wherein the electrical signals comprise measurements taken by the measurement means (21) and transmitted by the measurement means (21).

3. An electromechanical actuator according to claim 2, wherein the electrical signals comprise a power supply for the measurement means (21).

4. An electromechanical actuator according to any preceding claim, wherein the antennas (14, 22) are arranged substantially concentrically relative to each other when the portions are coupled together.
